# FASCICULE DE BREVET EUROPEEN

(11) **EP 2 741 587 B1**
(45) Date de publication et mention de la délivrance du brevet: **19.07.2017**
(21) Numéro de dépôt: 12306509.6
(22) Date de dépôt: 04.12.2012
(51) Int. Cl.: H05B 37/02, H05B 39/04, H05B 39/08, H02M 1/08

(54) **Dispositif variateur de l'intensité de la lumière dans des charges lumineuses**
Vorrichtung zur Veränderung der Lichtintensität in Leuchtladungen
Device for varying the intensity of the light in luminous charges

(43) Date de publication de la demande: 11.06.2014
(73) Titulaire: Hager Controls SAS, 67700 Saverne (FR)
(72) Inventeur: Elsass, Marc, 67140 Barr (FR); Muller, Steve, 67200 Strasbourg (FR); Poisson, Christophe, 67700 Furchhausen (FR)
(74) Mandataire: Nuss, Laurent

(56) Documents cités:
- WO-A2-2011/042510
- DE-A1- 2 511 648
- FR-A5- 2 149 142
- US-A1- 2006 192 502
- US-A1- 2012 025 802

## Description

La présente invention concerne un dispositif variateur de lumière, et plus particulièrement la possibilité pour de tels dispositifs de s'adapter à toutes les technologies de lampes actuellement disponibles sur le marché, bien entendu lorsqu'elles sont dimmables, et de permettre un fonctionnement « propre » de ces lampes, aussi bien lorsqu'elles sont allumées que lorsqu'elles sont éteintes. Elle a également trait à un procédé de fonctionnement d'un tel dispositif.

De manière très générale, les dispositifs variateurs ont pour vocation d'allumer ou d'éteindre des lampes à un niveau de luminance variable, mais également de régler leur niveau de luminosité en temps réel à l'aide d'un organe de commande. Ce réglage s'effectue classiquement par découpage de phase, la lampe étant alors une charge lumineuse pilotée par un étage de puissance soit en mode coupure à l'angle, par exemple pour les luminaires de type ampoule à filament, soit en mode conduction à l'angle notamment pour les charges lumineuses à caractère inductif comme les transformateurs ferromagnétiques pour ampoule halogène 12 ou 24 volts. Ce type de dispositif variateur concerne les lampes classiques, à incandescence ou halogènes, ainsi que des sources plus récentes comme les lampes fluo-compactes (CFL) ou les diodes électroluminescentes (LED). Relativement nouvelles venues dans la sphère des sources de lumière, ces lampes fluo-compactes (CFL) et diodes électroluminescentes (LED) ont aussi un niveau de luminosité qui est réglable, de préférence en mode coupure à l'angle.

L'alimentation variable des charges s'effectue ainsi en pratique au moyen d'un signal de sortie découpé dans la phase selon un mode de découpage qui dépend de la nature de la charge. Cette opération de « découpage » présente l'inconvénient de générer du bruit ou des signaux parasites sur le secteur, induisant une compatibilité électromagnétique (CEM) du variateur qui n'est pas satisfaisante, car il se produit des perturbations électromagnétiques qui ne sont pas tolérables pour les équipements qui se trouvent dans son environnement.

Pour réduire sensiblement ces signaux parasites, il est d'usage d'intégrer au variateur un condensateur de filtrage connecté entre la phase et la sortie vers la charge, qui permet alors de filtrer ces signaux parasites. Plus la lampe à commander est de forte puissance (supérieure à 300W), plus la présence de ce type de condensateur est nécessaire, et son filtrage est efficace.

Avec des charges du type CFL et LED, qui sont de petites puissances (inférieures à 10W), ce condensateur est sans effet significatif sur une lampe allumée, et l'utilisateur n'y voit pas d'effet visuel et/ou sonore. Cependant, lorsque la lampe est éteinte, celle-ci n'est plus pilotée par découpage de phase, et la présence de ce condensateur de filtrage entraine la circulation permanente d'un courant de fuite traversant la lampe.

Ce courant de fuite peut provoquer des effets visuels et/ou sonores sur les charges lumineuses, et c'est particulièrement le cas avec les lampes CFL et LED de petite puissance. En l'espèce, la lampe peut émettre un bruit parfaitement audible pour l'utilisateur, et également produire des flashs de lumière, voire un éclairage faible et continu parfaitement visible pour l'utilisateur. Ces phénomènes sonores et visuels, non voulus et non maîtrisés correspondent par conséquent à des nuisances pour l'utilisateur. Ils ne sont évidemment pas souhaitables et doivent être supprimés.

Le problème qui se pose ainsi, à l'heure actuelle, est de pouvoir commander, avec un variateur à découpage de phase, des charges aussi variées que :
- des lampes à halogène ou à incandescence de forte puissance (supérieure à 300W) nécessitant un condensateur de filtrage qui génère un courant de fuite de plusieurs mA dans les lampes ;
- des lampes CFL ou LED de petite puissance (inférieure à 10W) sensibles au courant de fuite lorsqu'elles sont éteintes.

La présente invention se propose de répondre à ce problème grâce à un dispositif variateur assurant la compatibilité électromagnétique et garantissant un fonctionnement "propre" des lampes quel que soit le type de charge.

A cet effet, le dispositif variateur de l'intensité de la lumière de l'invention comporte classiquement :
- une unité de contrôle de type microcontrôleur commandant un étage de puissance de découpage de phase connecté entre la phase du secteur et au moins une charge lumineuse ;
- une alimentation à découpage raccordée entre phase et neutre du secteur ;
- un condensateur de filtrage connecté entre la phase du secteur et la charge, en parallèle de l'étage de puissance de découpage, pour réduire les bruits sur le secteur.

Selon l'invention, ce dispositif se caractérise à titre essentiel en ce qu'il comprend des moyens de suppression du courant de fuite engendré par le condensateur de filtrage lorsque la charge n'est pas commandée. Il ne s'agit donc pas de dévier ce courant de fuite, ou d'amoindrir son intensité, mais de le couper.

Plus précisément, ces moyens de suppression du courant de fuite consistent en des moyens de déconnexion du condensateur de filtrage de la charge lorsqu'elle n'est pas commandée. L'idée à la base de l'invention est donc de connecter le condensateur de filtrage lorsque la lampe est allumée, et de le déconnecter lorsque la lampe est éteinte de manière à couper le courant de fuite et donc à l'empêcher d'atteindre la charge.

De manière concrète, lesdits moyens de déconnexion du condensateur de filtrage consistent en un relais électromécanique dont le contact est placé en série avec le condensateur de filtrage. Par conséquent, l'ensemble condensateur de filtrage et relais électromécanique est connecté entre la phase du secteur et la charge, en parallèle de l'étage de puissance de découpage.

Ce relais électromécanique est commandé par l'unité de contrôle.

Le contact du relais est fermé lorsque la charge est commandée, et le contact du relais est ouvert lorsque la charge n'est pas commandée.

Les modifications dans le pilotage du dispositif variateur de l'intensité de la lumière auquel sont appliquées des consignes de commande de la charge, notamment destinées à faire fonctionner de manière « propre » des charges lumineuses variées telles que décrites précédemment, sont gérées au travers d'un procédé de fonctionnement qui s'exprime, selon l'invention, par les étapes suivantes :
- détection d'une alimentation de la charge par le variateur ;
- fermeture du contact du relais ;
- temporisation ;
- activation du découpage de phase jusqu'à obtenir le niveau de luminosité désiré ;
- détection d'une cessation de l'alimentation de la charge par le variateur ;
- désactivation du découpage de phase ;
- ouverture du contact du relais.

Ainsi, lorsque la lampe est éteinte, le contact du relais est ouvert.

Lorsque le variateur allume la lampe, le circuit de commande ferme le contact du relais pour raccorder le condensateur de filtrage, puis démarre et fait varier le découpage de phase pour obtenir le niveau de luminosité désiré.

Enfin, lorsque le variateur éteint la lampe, le circuit de commande cesse le découpage de phase pour obtenir un niveau de luminosité nul, puis ouvre le contact du relais pour déconnecter le condensateur de filtrage et ainsi assurer l'absence de courant de fuite dans la lampe.

Les phénomènes acoustiques et lumineux indésirables sont de cette manière éliminés.

De préférence, la fermeture du contact du relais est synchronisée sur une détection du passage par zéro de la tension secteur. Cette possibilité permet d'éviter de faire circuler un courant trop fort dans le relais lors de la fermeture du contact et ainsi garantir son bon fonctionnement dans le temps. En effet, si le relais est bien fermé au zéro de la tension secteur, ce courant est nul. Si le relais est fermé de manière désynchronisée avec le zéro de la tension secteur, ce courant peut être très important et accélérer le vieillissement du relais.

Selon une configuration possible, la temporisation entre la fermeture du contact du relais et l'activation du découpage de phase est de l'ordre de 20ms. Il s'agit d'un temps suffisamment court pour ne pas être détecté par l'oeil d'un utilisateur. Cela signifie que ce dernier aura l'impression que l'allumage de la lampe est immédiat suite à la manipulation par exemple de l'organe de commande du variateur.

L'invention va à présent être décrite plus en détail, en référence aux figures pour lesquelles :
- la figure 1 est un schéma électronique d'un dispositif variateur de l'intensité de la lumière dans des charges lumineuses selon l'invention ;
- la figure 2 montre un organigramme illustrant le procédé de fonctionnement d'un tel dispositif.

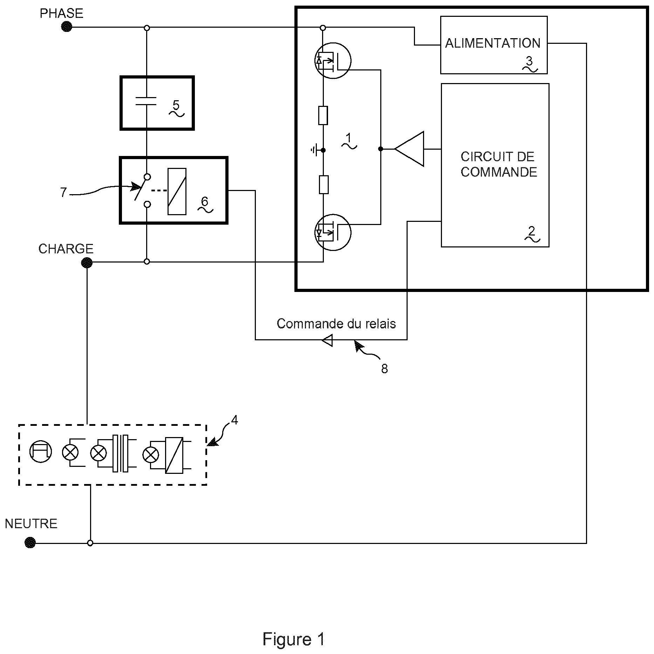

En référence à la figure 1, le dispositif variateur de l'invention comporte à titre principal un étage de puissance (1) de découpage de phase, une unité de contrôle du type microcontrôleur (2) et une alimentation à découpage (3).

L'étage de puissance (1) est classiquement basé sur deux transistors MOSFET de puissance, disposés tête-bêche entre la phase et la charge, et dont la commutation permet l'alimentation en mode de coupure à l'angle ou de conduction à l'angle de la charge (4) connectée en sortie de cet étage de puissance (1).

Le dispositif de l'invention est un variateur de type « trois fils », c'est-à-dire qu'il est relié au neutre du réseau, à la phase du réseau, et à la charge lumineuse. Un tel dispositif s'alimente par conséquent entre la phase et le neutre du réseau. Ainsi, l'alimentation à découpage (3) est connectée entre la phase et le neutre du réseau.

C'est le microcontrôleur (2) qui réalise les différents traitements logiques nécessaires au fonctionnement automatisé de l'ensemble, dont à titre principal la commande des transistors MOSFET en fournissant des consignes en fonction du mode de découpage.

En parallèle de l'étage de puissance (1) est connecté un condensateur de filtrage (5), entre la phase du réseau et la charge, dont le rôle consiste à filtrer les signaux parasites émis lors des opérations de découpage. Le condensateur de filtrage (5) est choisi parmi une large sélection selon le niveau de filtrage désiré.

Un relais électromécanique (6) est placé en série avec ce condensateur de filtrage, le contact (7) du relais (6) permettant de déconnecter ou de connecter le condensateur de filtrage (5) à la charge. Le contact (7) du relais (6) est commandé par le microcontrôleur (2), via une liaison (8) en sortie du microcontrôleur (2). Le microcontrôleur (2) commande la fermeture du contact (7) lorsque la lampe (4) est allumée, et commande l'ouverture du contact (7) lorsque la lampe (4) est éteinte.

Ce dispositif variateur comprend un étage de détection du passage par zéro de la tension secteur (non représenté), et qui consiste classiquement en un optocoupleur dont la sortie est connectée au microcontrôleur (2), le signal en sortie de l'optocoupleur reflétant le signal de phase et permettant au microcontrôleur (2) de détecter le passage par zéro de ladite phase.

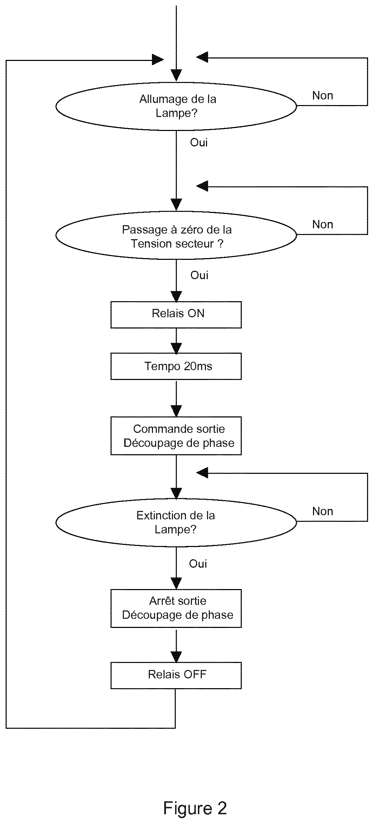

Comme le montre l'organigramme de la figure 2, qui correspond au fonctionnement du procédé de l'invention, le contact (7) du relais (6) est ouvert lorsque la lampe (4) est éteinte, et cela constitue le point de départ de l'organigramme.

Tant que la lampe (4) est éteinte, le relais (6) est commandé en position OFF.

Lorsque le variateur allume la lampe (4) suite à une consigne donnée par l'utilisateur, le microcontrôleur (2) se met à surveiller le signal de phase, et commande la fermeture du contact (7) du relais (6) dès lors qu'il détecte le passage à zéro de la tension secteur. Le raccordement du condensateur (5) se fait donc de manière synchronisée avec le passage par zéro de la tension secteur.

Suite à une temporisation de l'ordre de 20ms après la fermeture du contact (7) du relais (6), le microcontrôleur (2) commande l'activation du découpage de phase pour obtenir le niveau de luminosité désiré de la lampe (4).

Tant que la lampe (4) est allumée, le relais (6) est commandé en position ON.

Lorsque le variateur éteint la lampe (4) suite à une consigne donnée par l'utilisateur, le microcontrôleur (2) commande la désactivation du découpage de phase afin d'obtenir un niveau de luminosité nul, puis commande l'ouverture du contact (7) du relais (6) pour couper le courant de fuite généré par le condensateur (5) et ainsi garantir l'absence de courant de fuite dans la lampe (4). L'ouverture du contact (7) du relais (6) permet en fait de déconnecter le condensateur (5) de filtrage de la lampe (4), au moins jusqu'au prochain allumage de cette dernière.

L'invention a été décrite par le biais d'une solution préférentielle, qui n'est cependant pas limitative de l'invention. Celle-ci comporte des variantes, notamment en termes de temps d'action, et de moyens de connexion/déconnexion du condensateur lorsque la lampe est éteinte qui peuvent prendre d'autres formes, comme par exemple un opto-transistor bidirectionnel de type MOSFET qui viendrait remplacer le relais.

## Revendications

1. Dispositif variateur de l'intensité de la lumière dans des charges lumineuses (4) pouvant être du type fluo-compactes (CFL) dimmables ou diodes électroluminescentes (LED) dimmables, comportant :
- une unité de contrôle (2) de type microcontrôleur commandant un étage de puissance (1) de découpage de phase connecté entre la phase du secteur et au moins une charge lumineuse (4) ;
- une alimentation (3) à découpage raccordée entre la phase et le neutre du secteur ;
- un condensateur de filtrage (5) connecté entre la phase du secteur et la charge, en parallèle de l'étage de puissance (1) de découpage, pour réduire les bruits sur le secteur ;
**caractérisé en ce qu'**il comprend des moyens de suppression du courant de fuite engendré par le condensateur de filtrage (5) lorsque la charge (4) n'est pas commandée, lesdits moyens de suppression du courant de fuite consistant en des moyens de déconnexion du condensateur de filtrage (5) de la charge (4) lorsqu'elle n'est pas commandée.

2. Dispositif variateur de l'intensité de la lumière dans des charges lumineuses selon la revendication précédente, **caractérisé en ce que** lesdits moyens de déconnexion du condensateur de filtrage (5) consistent en un relais électromécanique (6) dont le contact (7) est placé en série avec le condensateur de filtrage (5).

3. Dispositif variateur de l'intensité de la lumière dans des charges lumineuses selon la revendication précédente, **caractérisé en ce que** le relais électromécanique (6) est commandé par l'unité de contrôle (2).

4. Dispositif variateur de l'intensité de la lumière dans des charges lumineuses selon la revendication précédente, **caractérisé en ce que** le contact (7) du relais (6) est fermé lorsque la charge (4) est commandée, et le contact (7) du relais (6) est ouvert lorsque la charge (4) n'est pas commandée.

5. Procédé de fonctionnement d'un dispositif variateur de l'intensité de la lumière dans des charges lumineuses selon les revendications précédentes, **caractérisé par** les étapes suivantes :
- détection d'une alimentation de la charge (4) par le variateur ;
- fermeture du contact (7) du relais (6) en série avec le condensateur de filtrage (5), le contact (7) et le condensateur de filtrage (5) étant électriquement en parallèle du variateur;
- temporisation ;
- activation du découpage de phase jusqu'à obtenir le niveau de luminosité désiré ;
- détection d'une cessation d'alimentation de la charge (4) par le variateur ;
- désactivation du découpage de phase ;
- ouverture du contact (7) du relais (6).

6. Procédé de fonctionnement d'un dispositif variateur de l'intensité de la lumière dans des charges lumineuses selon la revendication précédente, **caractérisé en ce que** la fermeture du contact (7) du relais (6) est synchronisée sur une détection du passage par zéro de la tension secteur.

7. Procédé de fonctionnement d'un dispositif variateur de l'intensité de la lumière dans des charges lumineuses selon la revendication précédente, **caractérisé en ce que** ladite temporisation est de l'ordre de 20ms.

## Patentansprüche

1. Vorrichtung zur Variation der Intensität des Lichts in Beleuchtungslasten (4), die vom Typ dimmbarer Kompaktleuchtstofflampen (CFL) oder dimmbarer Elektrolumineszenzdioden (LED) sein können, umfassend:
- eine Steuereinheit (2) vom Typ einer Mikrosteuereinheit, welche eine Phasenanschnitt-Leistungsstufe (1) steuert, die zwischen der Phase des Stromnetzes und mindestens einer Beleuchtungslast (4) angeschlossen ist;
- einen Schaltnetzteil (3), der zwischen der Phase und dem Neutralleiter des Stomnetzes angeschlossen ist;
- einen Filterkondensator (5), der zwischen der Phase des Stromnetzes und der Last, parallel zur Phasenanschnitt-Leistungsstufe (1), angeschlossen ist, um das Rauschen auf dem Netz zu reduzieren;
**dadurch gekennzeichnet, dass**
diese Mittel zur Unterdrückung des Leckstroms umfasst, der von dem Filterkondensator (5) erzeugt wird, wenn die Last (4) nicht gesteuert wird, wobei die Mittel zur Unterdrückung des Leckstroms aus Mitteln zur Trennung des Filterkondensators (5) von der Last (4) bestehen, wenn sie nicht gesteuert wird.

2. Vorrichtung zur Variation der Intensität des Lichts in Beleuchtungslasten nach dem vorhergehenden Anspruch,
**dadurch gekennzeichnet, dass**
die Mittel zur Trennung des Filterkondensators (5) aus einem elektromechanischen Relais (6) bestehen, dessen Kontakt (7) mit dem Filterkondensator (5) in Serie geschaltet ist.

3. Vorrichtung zur Variation der Intensität des Lichts in Beleuchtungslasten nach dem vorhergehenden Anspruch,
**dadurch gekennzeichnet, dass**
das elektromechanische Relais (6) von der Steuereinheit (2) gesteuert wird.

4. Vorrichtung zur Variation der Intensität des Lichts in Beleuchtungslasten nach dem vorhergehenden Anspruch,
**dadurch gekennzeichnet, dass**
der Kontakt (7) des Relais (6) geschlossen ist, wenn die Last (4) gesteuert wird, und der Kontakt (7) des Relais (6) offen ist, wenn die Last (4) nicht gesteuert wird.

5. Verfahren zum Betreiben einer Vorrichtung zur Variation der Intensität des Lichts in Beleuchtungslasten nach den vorhergehenden Ansprüchen, **gekennzeichnet durch** die folgenden Schritte:
- Detektieren einer Versorgung der Last (4) durch den Variator;
- Schließen des Kontakts (7) des Relais (6) in Serie mit dem Filterkondensator (5), wobei der Kontakt (7) und der Filterkondensator (5) elektrisch parallel zu dem Variator sind;
- Verzögern;
- Aktivieren des Phasenanschnitts, bis das gewünschte Helligkeitsniveau erhalten wird;
- Detektieren einer Beendigung der Versorgung der Last (4) durch den Variator;
- Deaktivierung des Phasenanschnitts;
- Öffnen des Kontakts (7) des Relais (6).

6. Verfahren zum Betreiben einer Vorrichtung zur Variation der Intensität des Lichts in Beleuchtungslasten nach dem vorhergehenden Anspruch,
**dadurch gekennzeichnet, dass**
das Schließen des Kontakts (7) des Relais (6) mit einer Detektion des Nulldurchgangs der Netzspannung synchronisiert wird.

7. Verfahren zum Betreiben einer Vorrichtung zur Variation der Intensität des Lichts in Beleuchtungslasten nach dem vorhergehenden Anspruch,
**dadurch gekennzeichnet, dass**
das Verzögern in der Größenordnung von 20 ms liegt.

## Claims

1. Dimmer device for varying the intensity of the light in lighting loads (4) that can be of dimmable compact florescent (CFL) or dimmable light-emitting diodes (LED) type, comprising:
- a control unit (2) of microcontroller type controlling a phase switching power stage (1) connected between the phase of mains and at least one lighting load (4);
- a switched-mode power supply (3) connected between the phase and the neutral of the mains;
- a filtering capacitor (5) connected between the phase of mains and the load, in parallel with the switching power stage (1), to reduce the noises on the mains;
**characterized in that** it comprises means for eliminating the leakage current generated by the filtering capacitor (5) when the load (4) is not controlled, said leakage current elimination means consisting of means for disconnecting the filtering capacitor (5) from the load (4) when it is not controlled.

2. Dimmer device for varying the intensity of the light in lighting loads according to the preceding claim, **characterized in that** said means for disconnecting the filtering capacitor (5) consist of an electromechanical relay (6) whose contact (7) is placed in series with the filtering capacitor (5).

3. Dimmer device for varying the intensity of the light in lighting loads according to the preceding claim, **characterized in that** the electromechanical relay (6) is controlled by the control unit (2).

4. Dimmer device for varying the intensity of the light in lighting loads according to the preceding claim, **characterized in that** the contact (7) of the relay (6) is closed when the load (4) is controlled, and the contact (7) of the relay (6) is open when the load (4) is not controlled.

5. Method for operating a dimmer device for varying the intensity of the light in lighting loads according to the preceding claims, **characterized by** the following steps:
- detection of a power supply of the load (4) by the dimmer;
- closure of the contact (7) of the relay (6) in series with the filter capacitor (5), the contact (7) and the filtering capacitor (5) being electrically in parallel with the dimmer;
- time delay;
- activation of the phase switching until the desired brightness level is obtained;
- detection of a cessation of power supply powering of the load (4) by the dimmer;
- disactivation of the phase switching;
- opening of the contact (7) of the relay (6).

6. Method for operating a dimmer device for varying the intensity of the light in lighting loads according to the preceding claim, **characterized in that** the closure of the contact (7) of the relay (6) is synchronized on a detection of the zero crossing of the mains voltage.

7. Method for operating a dimmer device for varying the intensity of the light in lighting loads according to the preceding claim, **characterized in that** said time delay is of the order of 20 ms.
